# EUROPEAN PATENT APPLICATION

(11) **EP 3 037 708 A1**
(43) Date of publication of application: **29.06.2016**
(21) Application number: 14834372.6
(22) Date of filing: 07.08.2014
(51) Int. Cl.: F16L 23/04, F16L 19/02

(54) **JOINT FOR HIGH-PRESSURE PIPES AND JOINT STRUCTURE**

(30) Priority: 07.08.2013 JP 2013164153; 27.09.2013 JP 2013200784
(71) Applicant: Shinohara Co., Ltd., Kobe-shi, Hyogo 651-2243 (JP)
(72) Inventor: SHINOHARA, Mitsukazu, Kobe-shi Hyogo 651-2243 (JP); SHINOHARA, Hisayuki, Kobe-shi Hyogo 651-2243 (JP)
(74) Representative: Casalonga
(86) International application number: PCT/JP2014/004136
(87) International publication number: WO 2015/019623

(57) **Abstract**

Provided is a joint for high-pressure pipes, which allows improved efficiency in pipe replacement work as well as improved seal performance and resistance against vibration of a pipe joint. The pipe joint for coupling a first pipe and a second pipe comprises: a first joint for coupling with a first pipe; a second joint for coupling with a second pipe; a clamp having a band portion that overlaps an abuttment part for of the first joint and the second joint, and that couples the first joint to the second joint in an abutting state; and a tightening element for shrinking the internal diameter of the band portion by a tightening operation. The external diameter of each end part of the first joint and the second joint in the abuttment part is larger than the external diameter of intermediate portions of the first joint and the second joint. The inner face of the band part is formed such that when the first joint and the second joint are in abutting state, each of the end parts of the first joint and the second joint fits the inner face of the band part of the clamp.

## Description

### [Technical Field]

This invention relates to a joint and a joint structure for high pressure pipes in the aim to improve the efficiency of a pipe exchange work.

### [Background Art]

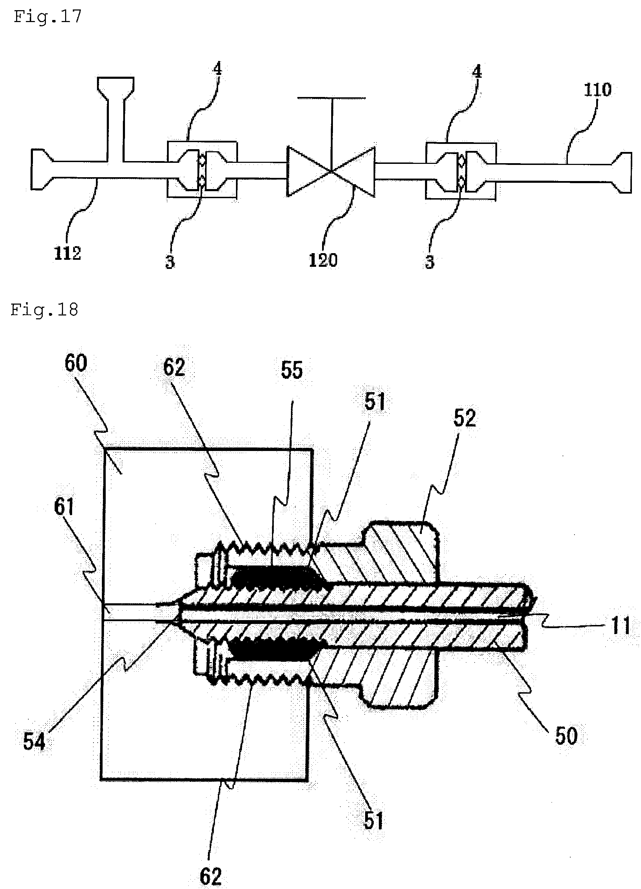

In a case of a conventional joint for high pressure pipes, high pressure pipes were attached to a joint main body through a gland nut under a state wherein the gland nut was attached to the end portion of a high pressure pipe as is shown figure 18. Namely, as is shown in figure 18, a gland nut 52 was fixed to a pipe 50 by insertion and screwing 51 into the pipe 50 from the end portion 54 of the pipe 50, which is attached to a joint main body 60 by screwing into the screw hole 62 thereof, conventionally. By this arrangement, a through-hole 61 of a joint main body 60 and an inner hole 11 of a pipe 50 become communicating.

However, in the case of the conventional joint for high pressure pipes, problems as described below exist.

The first problem is that an extraction margin for a pipe becomes necessary at the time of pipe exchange due to the fact that the plumbing of a joint is complicated. Especially in a plant wherein the plumbing is assembled in a narrow space and in such case wherein the plumbing is incorporated within equipment, there is a problem that assembling and disassembling are not completed if the right sequences thereof are not properly kept and it is taking so much effort to complete assembling and disassembling of those plumbing.

Also, in the case of a conventional joint for high pressure pipes, there is a problem that the torsion of a screw is transferred to plumbing when a joint is fastened in one direction and subsequently the other joint tends to be loosened.

Furthermore, in the case of a conventional joint for high pressure pipes, there is a problem that the vibration strength is small due to the fact that the joint is fixed at the end portion of a pipe by line sealing, which leads to a constraint that a large torque cannot be applied (only a small torque is allowed to be applied).

Under such a circumstance, a joint for high pressure pipes that realizes higher efficiency in pipe exchange work and improves seal efficiency and vibration resistance of the joint of a pipe is desired.

Note that, in the case of a pipe joint disclosed in the patent literature 1, seal efficiency is improved by using a clamp possessing plurality of deformed nails projecting toward the inside of the band portion that covers the fitting portion of both bands for coupling of the pipe. (Refer to the patent literature 1) However, it is difficult to use the pipe joint disclosed in the patent literature 1 for high pressure pipes.

### [Prior Art]

### [Patent literature]

[Patent literature 1] JP 1997-196270 A

### [Outline of the Invention]

### [Problems to be solved by the Invention]

In view of such circumstances, the present patent aims to improve efficiency of pipe exchange work and equipment exchange work, and to present a joint for high pressure pipes and a joint structure that improves seal efficiency and vibration resistance of a joint of a pipe.

### [Means to Solve the Objects]

In order to accomplish the object mentioned above, a joint for high pressure pipes from the first viewpoint according to the present invention, being a pipe joint for joining the first pipe and the second pipe, consists of 1) to 5) below;
1) A first joint connected to a first pipe
2) A second joint connected to a second pipe
3) A clamp having a band portion for covering a butted portion of the first joint and the second joint, which connects the first joint and the second joint in a butted state
4) A sealing that maintains seal efficiency of the butted portion
5) A tightening member for contracting the internal diameter of the band portion by a tightening operation

And the outer diameter of each end portion of the first joint and the second joint at the butted portion mentioned in 3) above is configured to be larger than the outer diameter of the middle portion between the first joint and the second joint and the inner surface of the band portion is formed in such a way that each end portion of the first joint and the second joint are fitted with the inner peripheral surface of the band portion at a clamp in the butted state of the first joint and the second joint.

Also, for the connection between the pipe and the joint in 1) and 2) above, the connection by a conventionally known configuration as mentioned above, namely a method wherein a fixation structure comprising a gland nut being inserted and screwed to a pipe from the end portion thereof is screwed into the screw hole of the joint (refer to figure 18) can be employed. Another configuration in which a pipe and a joint are connected by welding is also acceptable.

Also, the tightening member in 5) above can be a tightening bolt to be screwed, a combination of a bolt and a nut to be screwed and other conventional members that can be screwed.

Here, high pressure pipes are pipes generally called high pressure pipes to be used for the high pressure above 14.7 MPa. Note that this pipe can be used for the medium pressure around 5 MPa.

Also, various kinds of pipes different in size and use are included in the first pipe and the second pipe mentioned above, and further various kinds of valves such as safety valves, closing valves, check valves, decompression valves, globe valves and machineries such as filters, orifice valves, pressure gauges, flow meters, heat exchangers, compressors and pressure vessels are also included conceptually. Namely, the joint for high pressure pipes according to the present invention can be applied not only to a joint between pipes but also to a joint between a pipe and a machinery, also to a joint between machineries and a mechanism for connecting a joint to another joint. As another mode of joint usage such as a joint between a pipe and a machinery, and a j oint between machineries, the shape of the end portion of the pipe-shaped joint integrated with and projecting from the main body of the machinery can be configured to be larger than the pipe outer diameter of the intermediate portion positioned at the side of the machinery main body from the end portion of the pipe shaped joint. In that case, the pipe of the machinery main body as the first pipe or the second pipe and the first joint or the second joint, have an integrated structure. Namely, the machinery is to be selected from the group of safety valves, closing valves, check valves, decompression valves, globe valves and machineries such as filters, orifice valves, pressure gauges, flow meters, heat exchangers, compressors and pressure vessels, and the first pipe or the second pipe is the one projecting from the machinery main body, and the end portion of the first pipe or the second pipe can be processed to be used as the first joint or the second joint.

Also, the mechanism for connecting a joint and another joint is such that the shape of the end portion of the joint is processed or welded into the shape of the first joint or the second joint as mentioned above to be fixed to each other by a clamp while the end portion of a joint and the end portion of a joint are butted each other.

According to such a configuration, the first joint and the second joint can be shifted from the coaxial state by removing the clamp, which makes the pipe extraction margin unnecessary and resultantly provides higher efficiency of the pipe exchange work. Also, the seal efficiency can be improved from the viewpoint of the pipe joint sealing. Furthermore, according to the configuration mentioned above, the tip of the pipe is connected to the joint and the vibration resistance can be improved because vibration can be absorbed at the butted portion of the joints.

Next, a joint for high pressure pipes from the second viewpoint according to the present invention is explained.

The joint for high pressure pipes from the second viewpoint according to the present invention is a pipe joint for connecting the first pipe and the second pipe, and the pipe joint is configured by 1a) to 7a) below.
1a) A first joint that connects to a first pipe
2a) A second joint that connects to a second pipe
3a) A third joint that has one end portion that butts to the first joint and the other end portion that butts to the second joint
4a) A first clamp that has the first band portion for covering the butting portion of the first joint and the third joint and connects the first joint and the third joint in a butting state
5a) A second clamp that has the second band portion for covering the butting portion of the second joint and the third joint and connects the second joint and the third joint in a butting state
6a) A seal ring for maintaining the seal efficiency at the butting portion
7a) A tightening member for contracting the inner diameter of the band portion by a tightening operation

And, the outer diameter of each end portion of the first joint and the third joint at the butting portion of the first joint and the third joint described in 4a) above is configured to be larger than the outer diameter of the intermediate portion of the first and the third joints and the inner peripheral surface of the first band portion is formed in such a way that each end portion of the first joint and the third joint and the inner peripheral surface of the first band portion of the first clamp are fitted in the butting state of the first joint and the third joint.

Also, the outer diameter of each end portion of the second joint and the third joint at the butting portion of the second joint and the third joint described in 5a) above is configured to be larger than the outer diameter of the intermediate portion of the second joint and the third joint, and the inner peripheral surface of the second band portion is formed in such a way that each end portion of the second joint and the third joint and the inner peripheral surface of the second band portion of the second clamp are fitted in the butting state of the second joint and the third joint.

Also, the tightening member described in 7a) above can be such a member into which a butting bolt is screwed, for example, and another member which is butted by a bolt and a nut and so on that can be tightened in conventional ways.

According to such a configuration, the first joint and the third joint can be shifted from the coaxial state by removing the first clamp, and the second joint and the third joint can be shifted from the coaxial state, which makes the pipe extraction margin unnecessary and resultantly provides higher efficiency of the pipe exchange work. Furthermore, with regard to the seal efficiency of the joint of the pipe, a seal ring can improve the seal efficiency. Furthermore, according to the configuration mentioned above, the tip of the pipe is connected to the joint and the vibration resistance can be improved because vibration can be absorbed at the butted portion of the joints.

Here, it is preferable that the shape of the third joint is straight, L-shaped bendable in the region of 45° to 90° or U-shaped.

This is because these shapes can be flexibly applied to plumbing design. The L shape bendable in the region of 45° to 90° is called elbow. Here, "elbow" refers to bending in ducts and plumbing, and sometimes refers to L-shaped plumbing joints of water supply and drainage, a hot-water supply systems and steam systems.

Next, a joint for high pressure pipes from the third viewpoint according to the present invention is explained.

The joint for high pressure pipes from the third viewpoint according to the present invention is a pipe joint for connecting the first pipe, the second pipe and the third pipe and the pipe joint is configured by 1b) to 9b) below.
1b) A first joint that connects to a first pipe
2b) A second joint that connects to a second pipe
3b) A third joint that connects to a third pipe
4b) A fourth joint that possesses a first end portion that butts to the first joint, a second end portion that butts to the second joint and a third end portion that butts to the third joint.
5b) A first clamp that has a first band portion for covering the butting portion of the first joint and the fourth joint and connects the first joint and the fourth joint in a butting state
6b) A second clamp that has a second band portion for covering the butting portion of the second joint and the fourth joint and connects the second joint and the fourth joint in a butting state
7b) A third clamp that has the second band portion for covering the butting portion of the third joint and the fourth joint and connects the third joint and the fourth joint in a butting state
8b) A seal ring for maintaining the seal efficiency
9b) A tightening member for contracting the inner diameter of the band portion by a tightening operation

And, the outer diameter of each end portion of the first joint and the fourth joint at the butting portion of the first joint and the fourth joint described in 5b) above is configured to be larger than the outer diameter of the intermediate portion of the first and the fourth joint and the inner peripheral surface of the first band portion is formed in such a way that each end portion of the first joint and the fourth joint and the inner peripheral surface of the first band portion of the first clamp are fitted in a butting state of the first joint and the fourth joint.

Also, the outer diameter of each end portion of the second joint and the fourth joint at the butting portion of the second joint and the fourth joint described in 6b) above is configured to be larger than the outer diameter of the intermediate portion of the second joint and the fourth joint, and the inner peripheral surface of the second band portion is formed in such a way that each end portion of the second joint and the fourth joint and the inner peripheral surface of the second band portion of the second clamp are fitted in a butting state of the second joint and the fourth joint.

Also, the outer diameter of each end portion of the third joint and the fourth joint at the butting portion of the third joint and the fourth joint described in 7b) above is configured to be larger than the outer diameter of the intermediate portion of the third joint and the fourth joint, and the inner peripheral surface of the third band portion is formed in such a way that each end portion of the third joint and the fourth joint and the inner peripheral surface of the third band portion of the third clamp are fitted in a butting state of the third joint and the fourth joint.

Also, the tightening member described in 9b) above can be such a member into which a butting bolt is screwed, for example, and another member which is butted by a bolt and a nut, and so on that can be tightened in conventional ways.

Here, various kinds of pipes different in size and use are included in the first pipe, the second pipe and the third pipe mentioned above, and further various kinds of valves such as safety valves, closing valves, check valves, decompression valves, globe valves and machineries such as filters, orifice valves, pressure gauges, flow meters, heat exchangers, compressors and pressure vessels are also included conceptually. Namely, the joint for high pressure pipes according to the present invention can be applied not only to a joint between pipes but also to a joint between a pipe and a machinery, also to a joint between machineries. As another mode of joint usage such as a joint between a pipe and a machinery, a joint between machineries and a mechanism for connecting a joint to another joint, the shape of the end portion of the pipe-shaped joint integrated with and projecting from the main body of the machinery can be configured to be larger than the pipe outer diameter of the intermediate portion positioned at the side of the machinery main body from the end portion of the pipe shaped joint. In that case, the pipe of the machinery main body as the first pipe, the second pipe or the third pipe and the first joint, the second joint or the third joint, have an integrated structure. Namely, the machinery is to be selected from the group of safety valves, closing valves, check valves, decompression valves, globe valves and machineries such as filters, orifice valves, pressure gauges, flow meters, heat exchangers, compressors and pressure vessels, and the first pipe or the second pipe is the one projecting from the machinery main body, and the end portion of the first pipe, the second pipe or the third pipe can be processed to be used as the first joint, the second joint or the third joint.

According to such a configuration, the first joint and the fourth joint can be shifted from the coaxial state by removing the first clamp, the second joint and the fourth joint can be shifted from the coaxial state by removing the second clamp, and further the third joint and the fourth joint can be shifted from the coaxial state by removing the third clam, which make the pipe extraction margin unnecessary and resultantly provides higher efficiency of the pipe exchange work. Furthermore, with regard to the seal efficiency of the joint of the pipe, the seal ring can improve the seal efficiency. Furthermore, according to the configuration mentioned above, the tip of the pipe is connected to the joint and the vibration resistance can be improved because vibration can be absorbed at the butted portion of the joints.

Next, a joint for high pressure pipes from the fourth viewpoint according to the present invention is explained.

The joint for high pressure pipes from the fourth viewpoint according to the present invention is a pipe joint for connecting N pipes (N is equal to or larger than 3) and the pipe joint is configured by 1c) to 5c) below.
1c) N sub-joints connected to each pipe
2c) A main joint having N ends butted to sub joints
3c) N clamps each having a band portion that covers the butting portion of the sub joint and the main joint for connecting the sub joint and the main joint in a butted state
4c) A seal ring for maintaining the seal efficiency of the butting portion
5c) A tightening member for contracting the inner diameter of the band portion by a tightening operation

And, the outer diameter of each end portion of the sub joint and the main joint at the butting portion of the sub joint and the main joint described in 3c) above is configured to be larger than the outer diameter of the intermediate portion of the sub joint and the main joint, and the inner peripheral surface of the band portion is formed in such a way that each end portion of the sub joint and the main joint and the inner peripheral surface of the band portion of the clamp are fitted in a butting state of the sub joint and the main joint.

Also, the tightening member described in 5c) above can be such a member into which a butting bolt is screwed, for example, and another member which is butted by a bolt and a nut, and so on that can be tightened in conventional ways.

Here, various kinds of pipes different in size and use are included in the pipe mentioned above, and further various kinds of valves such as safety valves, closing valves, check valves, decompression valves, globe valves and machineries such as filters, orifice valves, pressure gauges, flow meters, heat exchangers, compressors and pressure vessels are also included conceptually. Namely, the joint for high pressure pipes according to the present invention can be applied not only to a joint between pipes but also to a joint between a pipe and a machinery, also to a joint between machineries and a mechanism for connecting a joint to another joint. As another mode of joint usage such as a joint between a pipe and a machinery, and a joint between machineries, the shape of the end portion of the pipe-shaped joint integrated with and projecting from the main body of the machinery can be configured to be larger than the pipe outer diameter of the intermediate portion positioned at the side of the machinery main body from the end portion of the pipe shaped joint. In that case, the pipe mentioned above projecting from the main body of the machinery and the j oint, have an integrated structure. Namely, the machinery is to be selected from the group of safety valves, closing valves, check valves, decompression valves, globe valves and machineries such as filters, orifice valves, pressure gauges, flow meters, heat exchangers, compressors and pressure vessels, and the pipe is the one projecting from the machinery main body, and the end portion of the pipe can be processed to be used as the sub joint.

According to such a configuration, the sub joint and the main joint can be shifted from the coaxial state by removing the clamp, which makes the pipe extraction margin unnecessary and resultantly provides higher efficiency of the pipe exchange work. Furthermore, with regard to the seal efficiency of the joint of the pipe, the seal ring can improve the seal efficiency. Furthermore, according to the configuration mentioned above, the tip of the pipe is connected to the joint and the vibration resistance can be improved because vibration can be absorbed at the butted portion of the joints.

The seal ring of a joint for high pressure pipes from the first viewpoint to the fourth viewpoint of the present invention mentioned above is preferably made of a metal material and the shape thereof being a rhombus shape or a square shape possessing two diagonal lines orthogonal to each other in its cut surface, also being abutted against the end surface of the joint opposing at the opposing pinnacle and preferably a retainable retainer is disposed at the end surface of said joint.

The retainer mentioned above for positioning of the seal ring has at least 3 claw portions around the seal ring which is engaged to the ditch and so on disposed at the circumference of the end portion of the joint. The interval of claw portion is better positioned by equal intervals. For example, if there were three claw portions, the claw portions are placed with 120° intervals. Another type of retainer with a claw portion disposed at a pedestal with a seal ring abutted thereto can be applicable.

Here, it is preferable that the metal material is cupper, brass or metals such as nickel but other alloys are also acceptable, but not limited to these materials.

By employing such a configuration, the seal efficiency can be further improved.

Also, the seal ring in the joint for high pressure pipes from the first to forth view points of the present invention is preferably O-rings made of a metal material or resin. The seal efficiency can be improved by employing an O-ring of metal materials. Here, the metal material is preferably copper, brass or nickel, but not limited to these materials. Note that the ditch for an O-ring is to be made at the end portion of the joint, and the ditch can be made at one of the both end surfaces or both end surfaces for butting in this case.

Also, it is preferable that the portion of the third joint in the joint for high pressure pipes from the second viewpoint of the present invention is equipped with a valve selected from a group of safety valves, closing valves, check valves, pressure redubbing valves, glove valves, ball valves and excess flow preventing valves, or any one of those which are selected from filters, orifice, pressure gauges, flow meters, heat exchangers, compressors and pressure vessels. Also, it is preferable that the portion of the fourth joint in the joint for high pressure pipes from the third viewpoint of the present invention is equipped with a valve selected from a group of safety valves, closing valves, check valves, pressure redubbing valves, glove valves, ball valves and excess flow preventing valves, or any one of those which are selected from filters, orifice, pressure gauges, flow meters, heat exchangers, compressors and pressure vessels. Also, it is preferable that the portion of the main joint in the joint for high pressure pipes from the third viewpoint of the present invention is equipped with a valve selected from a group of safety valves, closing valves, check valves, pressure redubbing valves, glove valves, ball valves and excess flow preventing valves, or any one of those which are selected from filters, orifice, pressure gauges, flow meters, heat exchangers, compressors and pressure vessels.

By equipping a part of a joint with various kinds of valves and devices such as filters, functionality can be added to the joint according to the present invention. Here, "equipping a valve at a part of a joint" represents the same meaning as "preparing a valve furnished with an end portion of the same specifications in the shape and the dimension as of the end portion of the present joint".

Also, in the joints for high pressure pipes from the first viewpoint to the fourth viewpoint of the present invention mentioned above, for a case where the seal ring is made of a metal material and the shape thereof being a rhombus shape in its cut surface along the axis direction, also being abutting against the end surface of the joint opposing at the opposing pinnacle, and a retainer capable of being held at the end portion of said joint, it is preferable to be configured that a shallow plate shaped recess being formed at the end portion of the joint, the taper angle of the inner peripheral surface of said recess being wider by 0° to 2° or narrower by 0° to 2° than the taper angle of the outer peripheral wall of the seal ring mentioned above so that the seal ring mentioned above can be engaged with the recess.

Here, the taper angle of the inner peripheral surface of the r ecess is 10° to 80°, preferably 50° to 70°, and further preferably a bout 60°.

By configuring the end surface of the joint as mentioned above, the adhesion between the tapered outer peripheral wall set at the end surface and the seal ring is strengthened and the seal efficiency can be improved and the resistance against a high pressure can be heightened.

Here, the reason for making the taper angle of the inner peripheral surface of the recess larger than the taper angle of the outer peripheral surface of the sealing by 0° to 2° is that the taper angle of the outer peripheral surface of the seal ring is widened to become virtually the same as the taper angle of the inner peripheral surface of the recess resulting in the close fitting of the both. Note that the taper angle of the inner peripheral surface of the recess is preferably made to be wider than the taper angle of the outer peripheral surface of the seal ring by about 1°.

Also, by making the taper angle of the inner peripheral surface of the recess narrower than the taper angle of the outer peripheral surface of the seal ring by 0° to 2 °, the seal ring becomes abutted at first to the edge portion being a boundary between the tapered outer peripheral surface and the end surface when the seal ring is butted against the end surface of the pipe joint, and the sealing can become secure at the above mentioned edge portion due to expansion of the taper angle of the outer peripheral surface of the seal ring when a force is exerted at the edge surface of the pipe joint in the butting direction. Note that the taper angle of the inner peripheral surface of the recess is preferably made to be narrower than the taper angle of the outer peripheral surface of the seal ring by about 1°.

Similarly, in the joints for high pressure pipes from the first viewpoint to the fourth viewpoint of the present invention mentioned above, for a case where the seal ring is made of a metal material and the shape thereof being a rhombus shape in its cut surface along the axis direction, also being abutting the end surface of the joint opposing at the opposing pinnacle, and a retainer capable of being held at the end of said joint, it is preferable to be configured that a shallow ring shaped recess is formed at the end portion of the joint, the taper angle of the inner peripheral surface of said recess is wider by 0° to 2° or narrower by 0° to 2° than the taper angle of the outer peripheral wall of the seal ring mentioned above so that the seal ring mentioned above can be engaged with the recess.

Here, the taper angle of the inner peripheral surface of the recess is 10° to 80°, preferably 50° to 70°, and further preferably about 60°.

Also, the joint for high pressure pipes according to the present invention possesses a rhombus shape at the cut surface along the axis direction and it is a joint that keeps the seal efficiency at the butting portion of joints by using a seal ring made of metal material, abutting against the end surface of the joint opposing at the opposing pinnacle. A shallow disc shaped recess or a shallow ring shaped recess is formed at the center of the end surface of the joint. Also, the taper angle of the inner peripheral surface of the recess is wider by 0° to 2° or narrower by 0° to 2° than the taper angle of the outer peripheral wall of the seal ring and the seal ring mentioned above can be engaged with the recess.

Here, the taper angle of the inner peripheral surface of the recess is 10° to 80°, preferably 50° to 70°, and further preferably about 60°.

By configuring the end surface of the joint as mentioned above, the adhesion between the tapered outer peripheral wall set at the end surface and the seal ring is strengthened and the seal efficiency can be improved and the resistance against a high pressure can be heightened.

Here, the reason for making the taper angle of the inner peripheral surface of the recess larger than the taper angle of the outer peripheral surface of the sealing by 0° to 2° is that the taper angle of the outer peripheral surface of the seal ring is widened to become virtually the same as the taper angle of the inner peripheral surface of the recess resulting in the close fitting of the both. Note that the taper angle of the inner peripheral surface of the recess is preferably made to be wider than the taper angle of the outer peripheral surface of the seal ring by about 1°.

Also, by giving roundness to the tapered edges of the inner peripheral surface of the recess and the outer peripheral wall of the seal ring, fitting can be smoothly performed.

Also, by making the taper angle of the inner peripheral surface of the recess narrower than the taper angle of the outer peripheral surface of the seal ring by 0° to 2°, the seal ring becomes abutted at first to the edge portion being a boundary between the tapered outer peripheral surface and the end surface when the seal ring is butted against the end surface of the pipe joint, and the sealing can become secure at the above mentioned edge portion due to expansion of the taper angle of the outer peripheral surface of the seal ring when a force is exerted at the edge surface of the pipe joint in the butting direction. Note that the taper angle of the inner peripheral surface of the recess is preferably made to be narrower than the taper angle of the outer peripheral surface of the seal ring by about 1°.

Also, by giving roundness to the tapered edges of the inner peripheral surface of the recess and the outer peripheral wall of the seal ring, fitting can be smoothly performed.

Also, the joint for high pressure pipes from the other viewpoint of the present invention being a pipe joint for connecting the first pipe and the second pipe, and the pipe joint is configured by 1) to 5) below.
1) A first joint having an end portion, an intermediate portion and a step portion, for being connected to a first pipe
2) A second joint having an end portion, intermediate portion and a step portion, for being connected to a second pipe
3) A male screw portion having a through hole with a male screw formed at an outer peripheral portion
4) A female nut in a cap-nut shape to be fixed by screwing to a male screw portion
5) A seal ring for maintaining the seal efficiency of a butting portion

The outer diameter of each end portion of the first joint and the second joint at the butting portion in 1) and 2) mentioned above is larger than the outer diameter of the intermediate portion of the first joint and the second joint.

Also, the inner peripheral surface of the through hole at the male screw portion in 3) above is configured by the first inner peripheral surface and the second inner peripheral surface with diameters quasi same as, larger than or smaller than the outer diameter of the end portion of the joint and a step portion formed in between.

Also, the inner peripheral surface of the female nut in 4) above is configured by the third inner peripheral surface and the fourth inner peripheral surface with diameters quasi same as, larger than and smaller than the outer diameter of the male screw portion and the outer diameter of intermediate portion of the joint, and a step portion formed in between.

And, when the butting portion of the first joint and the second joint is stored under the state wherein the step portion of the first joint and the step portion of said male screw portion are stored into the through hole of the male screw portion and a female nut is fixed to the male screw portion by screwing, the step portion of the female nut and the step portion of the second joint are abutted.

In the case of a joint for high pressure pipes by the configuration mentioned above, a male screw portion and a female nut are employed instead of employing a clamp that connects the first joint and the second joint in a butting state, which is different from the joint for high pressure pipes from the first viewpoint to the fourth viewpoint.

Next, the structure of the joint according to the present invention is explained. The structure of the joint according to the present invention is described by a case wherein the end surface of the joint on one side is any one of various valves such as safety valves, closing valves, check valves, pressure redubbing valves, glove valves, ball valves and excess flow preventing valves, or by a case wherein the end surface of the joint is the end surface of any one of the joint selected from filters, orifice, pressure gauges, flow meters, heat exchangers, compressors and pressure vessels.

The structure of the joint according to the present invention is of a rhombus shape or a square shape having two diagonal lines orthogonal to each other in the cut surface along the axis direction, and the seal efficiency at the butting portion with the pipe joint is preserved using a seal ring made of a metal material abutting with the end surface of the joint opposing at the opposing pinnacle, and the shape of the end surface of the joint involves a structure wherein a shallow recess of a plate shape or a ring shape is formed at the center of the end surface. The taper angle at the inner peripheral surface of the recess is wider than the taper angle of the outer peripheral wall of the seal ring by 0° to 2° or narrower by 0° to 2°, having a structure that can provide fitting between the seal ring and the recess.

Here, the taper angle of the inner peripheral surface of the recess is 10° to 80°, preferably 50° to 70°, and further preferably about 60°.

The structure of the joint mentioned above can strengthen the adhesive strength between the seal ring and the taper shaped outer peripheral wall positioned at the end surface, the seal efficiency is improved, and the resistance against high pressure can be heightened.

### [Effects of the Invention]

According to the joint for high pressure pipes and the structure of the joint, the efficiency of pipe exchange and device exchange work can be improved and the seal efficiency and anti-vibration performances can be improved.

### [Brief Description of the Drawings]

[Figure 1] A configuration figure 1 of the joint for high pressure pipes according to embodiment 1
[Figure 2] A configuration figure 2 of the joint for high pressure pipes according to embodiment 1
[Figure 3] A configuration figure of the joint for high pressure pipes according to embodiment 2
[Figure 4] A configuration figure of the joint for high pressure pipes according to embodiment 3
[Figure 5] A configuration figure of the joint for high pressure pipes according to embodiment 4
[Figure 6] A configuration figure of the joint for high pressure pipes according to embodiment 5
[Figure 7] A configuration figure of the joint for high pressure pipes according to embodiment 6
[Figure 8] An explanatory figure of the seal ring for the joint for high pressure pipes according to embodiment 7
[Figure 9] A shape graphic of the end surface of the pipe joint
[Figure 10] A variation of the shape of the end surface of the pipe joint
[Figure 11] A shape of the end surface of the pipe joint and an image of a seal ring
[Figure 12] A configuration figure of the joint for high pressure pipes according to embodiment 8
[Figure 13] A configuration figure of the joint for high pressure pipes according to embodiment 9
[Figure 14] An explanatory figure of the joint for high pressure pipes structure according to embodiment 10
[Figure 15] A configuration figure of the joint for high pressure pipes according to embodiment 11
[Figure 16] An explanatory figure 1 for use of the joint for high pressure pipes according to embodiment 11
[Figure 17] An explanatory figure 2 for use of the joint for high pressure pipes according to embodiment 11
[Figure 18] A configuration figure of the conventional joint for high pressure pipes

### [Best Mode for Carrying Out the Invention]

Embodiments of the present invention will be described in detail below with reference to the drawings. The present invention is not limited to the following embodiment and examples of shown in the figure.

### [Embodiment 1]

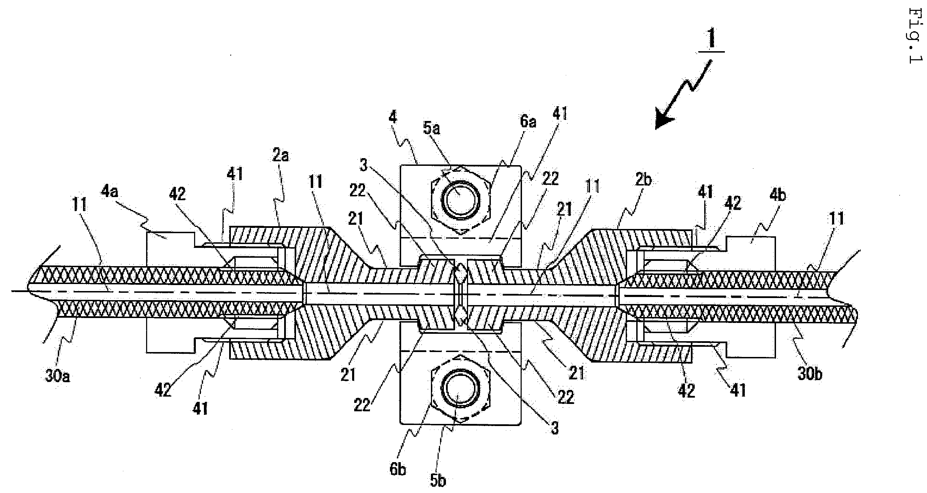

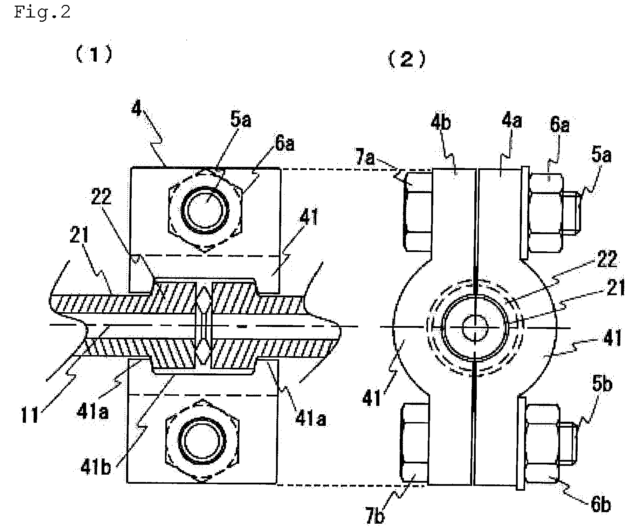

The joint for high pressure pipes according to embodiment 1 is explained by referencing figures 1 and 2. Embodiment 1 is a pipe joint 1 connecting the first pipe 30a and the second pipe 30b.

The pipe joint 1 according to embodiment 1 includes a first joint 2a connected to a first pipe 30a and a second joint 2b connected to a second pipe 30b and a band portion 4 that covers an abutting portion of the first joint 2a and the second joint 2b, and is configured with a clamp 4 for connecting the first joint 2a and the second joint 2b in an abutting state, a seal ring 3 for preserving the seal efficiency at the abutting portion and two tightening bolts (5a, 2b) for contracting the inner diameter of the band portion 41 by a tightening operation.

The seal ring 3 is made of a metal material and the shape thereof is rhombus in its cut surface along the axis direction and is abutted to the end surface of the joint opposing at the opposing pinnacle, improving the seal efficiency.

The first joint 2a can be connected to the first pipe 30a by a conventionally known configuration as shown in figure 18. Namely, a gland nut 4a is inserted and screwed 42 into a pipe from the end portion of the first pipe 30a to be fixed, which is installed by screwing into the screw hole of the first joint 2a. By this assembly, the inner vacancy 11 of the first joint 2a and the inner vacancy 11 of the first pipe 30a are communicated. The second joint 2b and the second pipe 30b are installed in a similar way as that of the first joint 2a and the first pipe 30a. Here, the installation method for the first joint 2a and the first pipe 30a can be other conventionally known methods. This is the same for the following embodiments.

The outer diameters of each end portion 22 of the first joint 2a and the second joint 2b at the butting portion as shown in figure 2 (1) is larger than the outer diameter of the intermediate portion 21 of the first joint 2a and the second joint 2b and the inner surface 42 of the band portion 41 is formed in such a way that the inner surface 42 of the band portion 41 at the clamp 4 and each end portion 22 of the first joint 2a and the second joint 2b can be fitted in the abutting state of the first joint 2a and the second joint 2b.Namely, the outer diameter of each end portion 22 of the first joint 2a and the second joint 2b is larger than that of the intermediate portion 21. Note that the diameter (inner diameter) of an inner void 11 does not particularly differ at the end portion 22 and the intermediate portion 21. The difference between the diameters at the end portion 22 and the intermediate portion 21 can be 2 to 3 mm, but there is not any particular limitation. As is shown in figure 2 (1), the central portion 41b in the internal surface 42 of the band portion 41 at the clamp 4 is depressed and the first joint 2a, the second joint 2b and the clamp 4 are stably connected because the internal surface 42 of the band portion 41 at the clamp 4 and each end portion 22 of the first joint 2a and the second joint 2b can be fitted under a butted state of the first joint 2a and the second joint 2b.

### [Embodiment 2]

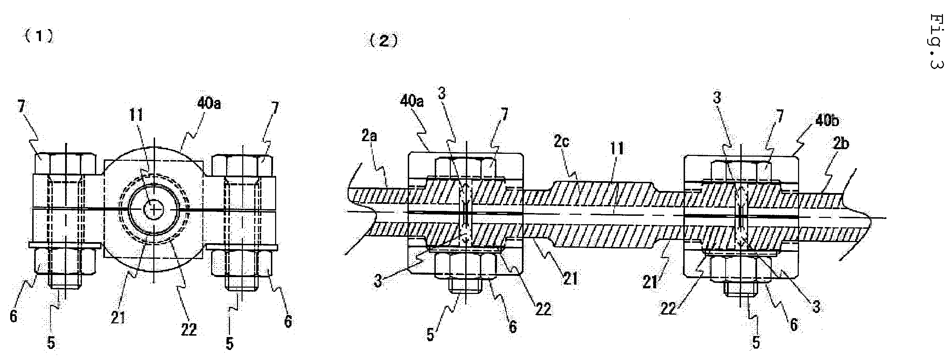

The joint for high pressure pipes in embodiment 2 is explained by referencing figure 3.

Embodiment 2, as in the case of embodiment 1, refers to a pipe joint for connecting the first pipe 30a and the second pipe 30b. Note that the first pipe 30a and the second pipe 30b are omitted and not shown in figure 3.

The pipe joint in embodiment 2 consists of a first joint 2a to be connected to a first pipe 30a, a second joint 2b to be connected to a second pipe 30b, a third joint 2c having one end portion to be butted against the first joint 2a and another end portion to be butted against the second joint 2b, a first band portion for covering the butting portion of the first joint 2a and the third joint 2c, the first clamp 40a for connecting the first joint 2a and the third joint 2c in a butting state and the second band portion for covering the butting portion of the second joint 2b and the third joint 2c, and is configured with the second clamp 40b for connecting the second joint 2b and the third joint 2c under a butting state, a seal ring 3 for maintaining seal efficiency at the butting portion and a fastening bolt 5 for contracting the inner diameter of the band portion 41 by a tightening operation.

Here, the third joint 2c is straight shaped. Also, the seal ring 3 is made of a metal material and the shape thereof in the cut surface along the axis direction is rhomboidal and being abutted to the end surface of the joint opposing at the opposing pinnacle, for improved seal efficiency.

And, the outer diameter of each end portion 22 of the first joint 2a and the third joint 2c at the butting portion of the first joint 2a and the third joint 2c is larger than the outer diameter of the intermediate portion 21 of the first joint 2a and the third joint 2c, and the inner surface of the first band portion is formed in such a way that the inner surface of the first band portion at the first clamp 40a and each end portion 22 of the first joint 2a and the third joint 2c are fitted in the butted state of the first joint 2a and the third joint 2c.

Also, the outer diameter of each end portion 22 of the second joint 2b and the third joint 2c at the butting portion of the second joint 2b and the third joint 2c is larger than the outer diameter of the intermediate portion 21 of the second joint 2b and the third joint 2c, and the inner surface of the second band portion is formed in such a way that the inner surface of the second band portion at the second clamp 40b and each end portion 22 of the second joint 2a and the third joint 2c are fitted in the butted state of the second joint 2b and the third joint 2c.

### [Embodiment 3]

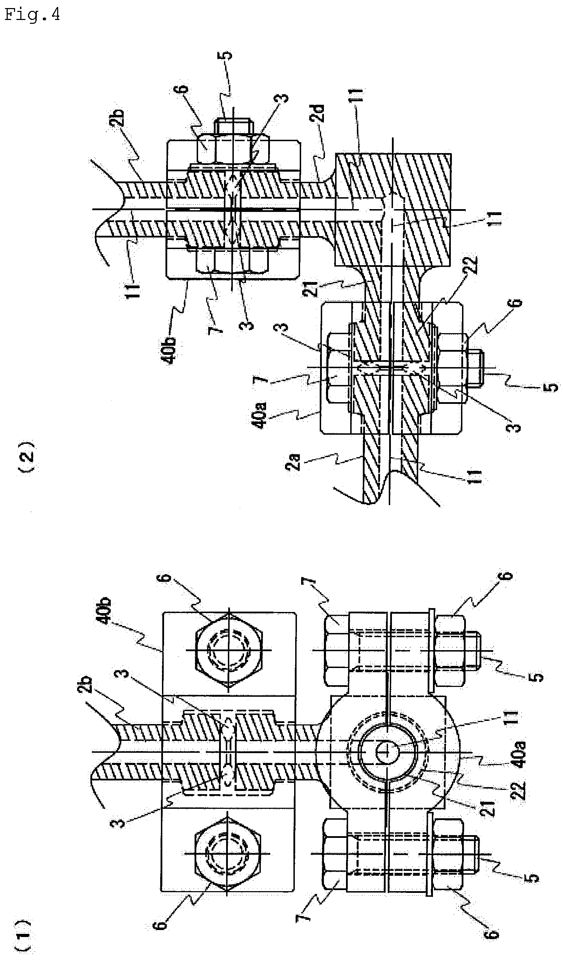

The joint for high pressure pipes in embodiment 3 is explained by referencing figure 4.

Embodiment 3, as in the case of embodiment 1, refers to a pipe joint for connecting the first pipe 30a and the second pipe 30b. Note that the first pipe 30a and the second pipe 30b are omitted and not shown in figure 4.

The pipe joint in embodiment 3 consists of the first joint 2a to be connected to the first pipe 30a, the second joint 2b to be connected to the second pipe 30b, the third joint 2d having one end portion to be butted to the first joint 2a and another end portion to be butted to the second joint 2b, the first band portion for covering the butting portion of the first joint 2a and the third joint 2d, the first clamp 40a for connecting the first joint 2a and the third joint 2d in an butting state and the second band portion for covering the butting portion of the second joint 2b and the third joint 2d, and is configured with the second clamp 40b for connecting the second joint 2b and the third joint 2d under an butting state, a seal ring 3 for maintaining the seal efficiency at the butting portion and a fastening bolt 5 for contracting the inner diameter of the band portion 41 by a tightening operation.

Here, the third joint 2d is L -letter shaped bendable by 45°. Also, the seal ring 3 is made of a metal material and the shape thereof in the cut surface along the axis direction is rhomboidal and being abutted to the end surface of the joint opposing at the opposing pinnacle, for improved seal efficiency.

And, the outer diameter of each end portion 22 of the first joint 2a and the third joint 2d at the butting portion of the first joint 2a and the third joint 2d is larger than the outer diameter of the intermediate portion 21 of the first joint 2a and the third joint 2d, and the inner surface of the first band portion is formed in such a way that the inner surface of the first band portion at the first clamp 40a and each end portion 22 of the first joint 2a and the third joint 2d are fitted in the butted state of the first joint 2a and the third joint 2d.

Also, the outer diameter of each end portion 22 of the second joint 2b and the third joint 2d at the butting portion of the second joint 2b and the third joint 2d is larger than the outer diameter of the intermediate portion 21 of the second joint 2b and the third joint 2d, and the inner surface of the second band portion is formed in such a way that the inner surface of the second band portion at the second clamp 40b and each end portion 22 of the second joint 2a and the third joint 2d are fitted in the butted state of the second joint 2b and the third joint 2d.

### [Embodiment 4]

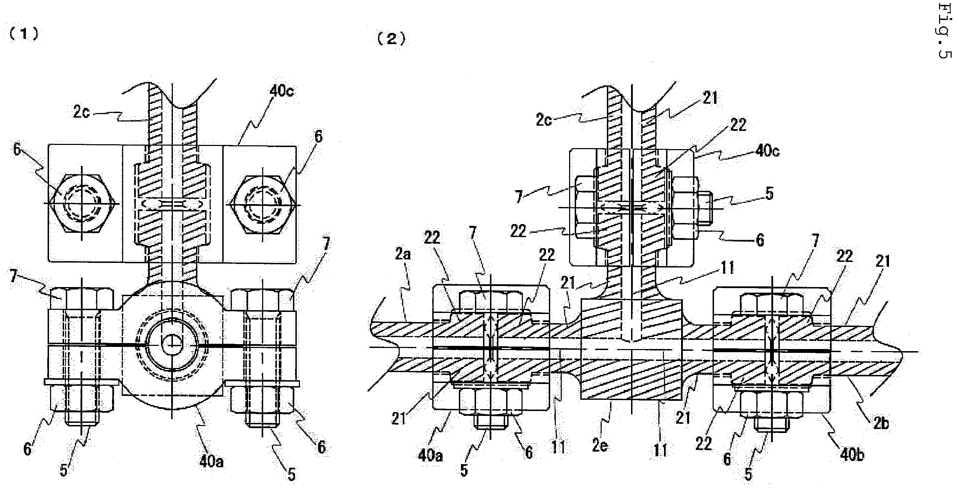

The joint for high pressure pipes in embodiment 4 is explained by referencing figure 5.

Embodiment 4 refers to a pipe joint for connecting three pipes. Note that three pipes (the first pipe, the second pipe and the third pipe) are omitted and not shown in figure 5.

The pipe joint in embodiment 4 is configured by the followings.
1) A first joint 2a to be connected to a first pipe
2) A second joint 2b to be connected to a second pipe
3) A third joint 2c to be connected to a third pipe
4) A fourth joint 2e having a first end portion butted to a first joint 2a, a second end portion butted to a second joint 2b and a third end portion butted to a third joint 2c
5) A first clamp 40a having a first band portion for covering the butting portion of the first joint 2a and the fourth joint 2e and having the first joint 2a and the fourth joint 2e connected under an butted state
6) A second clamp 40b having a second band portion for covering an butting portion of the second joint 2b and the fourth joint 2e and having the second joint 2b and the fourth joint 2e connected in an butting state
7) A third clamp 40c having the third band portion for covering the butting portion of the third joint 2c and the fourth joint 2e and having the third joint 2c and the fourth joint 2e connected in an butting state
8) A seal ring 3 for maintaining the seal efficiency of an abutting portion
9) A tightening bolt 5 for contracting the inner diameter of the band portion 41 by tightening operation

Also, the seal ring 3 is made of a metal material and the shape thereof in the cut surface along the axis direction is rhomboidal and being abutted to the end surface of the joint opposing at the opposing pinnacle, for improved seal efficiency

A fourth joint 2e is equipped with end portions in three directions perpendicular to each other, a first end portion butted to a first joint 2a and a second end portion butted to a second joint 2b are positioned apart to each other by 180° and a third end portion butted to a third joint 2c is disposed orthogonally on the line connecting the first end portion and the second end portion.

And, the outer diameter of each end portion 22 of the first joint 2a and the fourth joint 2e at the butting portion of the first joint 2a and the fourth joint 2e is larger than the outer diameter of the intermediate portion 21 of the first joint 2a and the fourth joint 2e, and the inner surface of the first band portion is formed in such a way that the inner surface of the first band portion at the first clamp 40a and each end portion 22 of the first joint 2a and the fourth joint 2e are fitted in the butted state of the first joint 2a and the fourth joint 2e.

Also, the outer diameter of each end portion 22 of the second joint 2b and the fourth joint 2e at the butting portion of the second joint 2b and the fourth joint 2e is larger than the outer diameter of the intermediate portion 21 of the second joint 2b and the fourth joint 2e, and the inner surface of the second band portion is formed in such a way that the inner surface of the second band portion at the second clamp 40b and each end portion 22 of the second joint 2b and the fourth joint 2e are fitted in the butted state of the second joint 2a and the fourth joint 2e.

Also, the outer diameter of each end portion 22 of the third joint 2c and the fourth joint 2e at the abutting portion of the third joint 2c and the fourth joint 2e is larger than the outer diameter of the intermediate portion 21 of the third joint 2c and the fourth joint 2e, and the inner surface of the third band portion is formed in such a way that the inner surface of the third band portion at the third clamp 40c and each end portion 22 of the third joint 2c and the fourth joint 2e are fitted in the butted state of the third joint 2c and the fourth joint 2e.

### [embodiment 5]

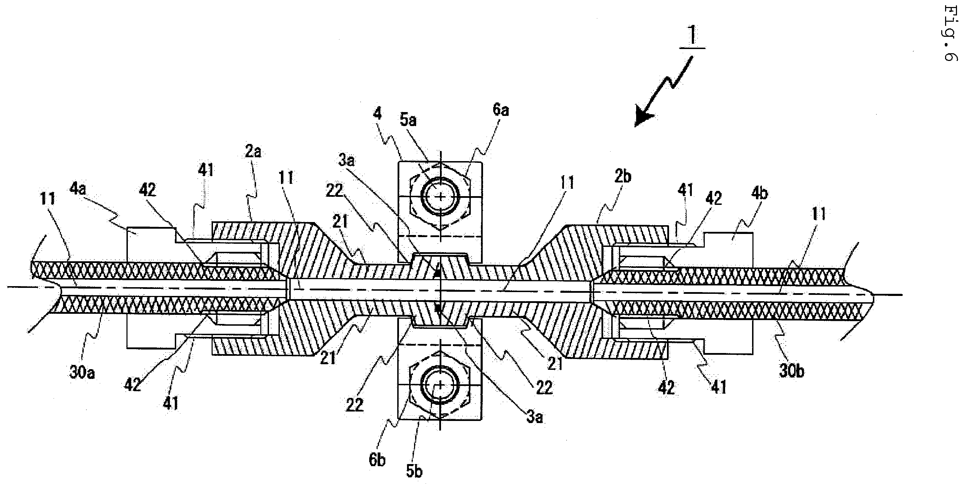

The joint for high pressure pipes in embodiment 5 is explained by referencing figure 6.

Embodiment 5, as in the case of embodiment 1, refers to a pipe joint for connecting the first pipe 30a and the second pipe 30b. Note that the first pipe 30a and the second pipe 30b are omitted and not shown in figure 6.

The configuration of the joint for high pressure pipes according to embodiment 5 is different in the configuration of the joint for high pressure pipes and also in the configuration of a seal ring from the ones by embodiment 1.

In the case of the seal ring 3 for the joint for high pressure pipes in embodiment 1, the seal ring 3 is made of a metal material and the shape thereof in the cut surface along the axis direction is rhomboidal and being abutted to the end surface of the joint opposing at the opposing pinnacle, for improved seal efficiency.

### [Embodiment 6]

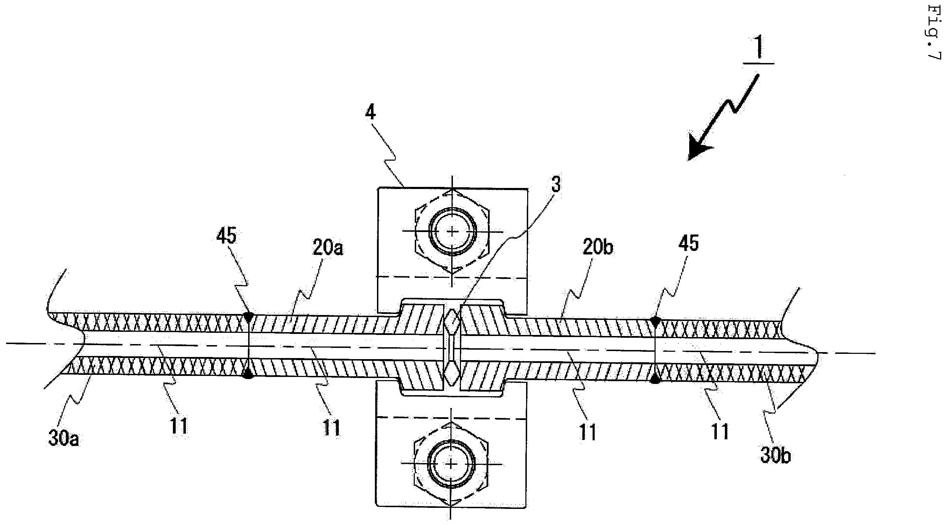

The joint for high pressure pipes in embodiment 6 is explained by referencing figure 7.

Embodiment 6, as in the case of embodiment 1, refers to a pipe joint for connecting the first pipe 30a and the second pipe 30b. Unlike embodiment 1 described above, the method for connecting the first pipe 30a and the second pipe 30b is represented by the welded portion 45 which directly connects the first pipe 30a and the first joint 20a, the second pipe 30b and the second joint 20b, respectively. Note that it is acceptable to connect the pipe and the joint by welding also in the case of joints for high pressure pipes in embodiments 2 to 5 described above.

### [Embodiment 7]

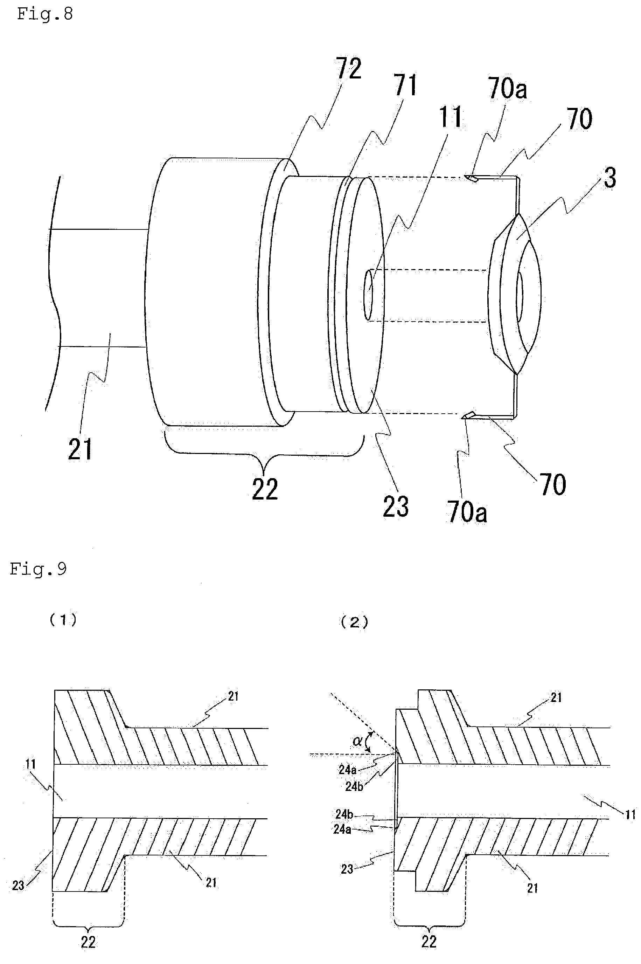

In embodiment 7, the seal ring used in a joint for high pressure pipes is explained by referencing figure 8.

The seal ring 3 is made of metal materials such as cupper, brass or nickel and the shape thereof in the cut surface along the axis direction is rhomboidal and being abutted to the end surface of the joint opposing at the opposing pinnacle, and a retainer 70 sustainable at the end surface of said joint is disposed.

A claw portion 70a is set up around a seal ring 3. Two claw portions 70a opposing each other by 180° is shown in figure 8. However, it is practically desirable from the viewpoint of positioning to dispose three claw portions with an interval of 120° or four claw portions with an interval of 90°. Note that the claw portion 70a can be disposed circularly around the whole circumference of the seal ring.

A groove portion 71 is disposed around the edge portion 22 of a joint and it is configured that said groove portion 71 and a protuberance of a pawl portion 70a can be engaged.

Note that it is more desirable to dispose a step 72 at an edge portion 22 as shown in figure 8, considering the thickness of a claw portion 70a of the seal ring 3.

### [Embodiment 8]

Figure 9 shows a shape graphic of an end surface of a pipe joint. Figure 9 (1) shows a cross section of a joint used in embodiments 1 to 6 mentioned above. The end surface 23 of an end portion 22 of a joint does not have a step, being flat. Note that a cross section in figure 9 is shown to be closed at the end surface 23 for convenience of explaining, however, 11 is actually an inner void of a pipe going through the end surface 23.

The end surface of a joint to be explained in embodiment 8 has shallow plate shaped recesses (24a and 24b) being formed at the end surface 23 of the end portion 22 of the joint. The taper angle α of the inner peripheral face of a concave is made to be larger than the taper angle of an outer peripheral wall of a seal ring by 1°.

It is presupposed here that a seal ring, with a cross section along the axis direction being rhombic, made of metal material, to be abutted to the edge surface of a joint opposing at the opposing pinnacle, is used.

The taper angle α of the inner peripheral surface of this recess is 59°. It is made to be larger than the taper angle 58° of the outer peripheral wall by 1°. Also, the depth of the ditch is 0.3 mm.

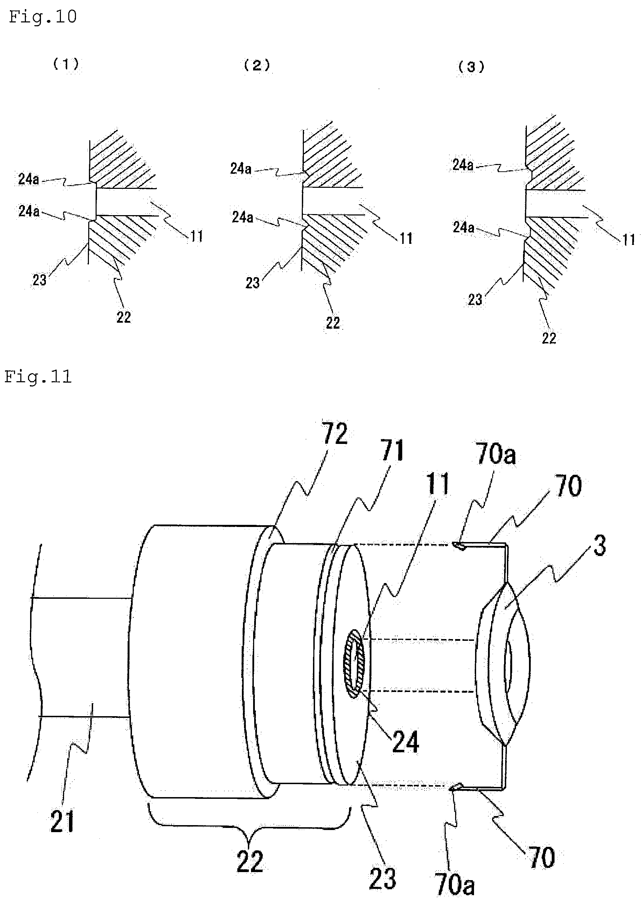

Figure 10 shows a variation of the shape of the end surface of a pipe joint. Figure 10 (1) represents a shallow dish like recess formed at the center of the end surface 23 of a joint. A taper 24a is formed at the inner peripheral surface of the recess which is abutted to the taper of the outer peripheral wall of the seal ring to heighten the sealing efficiency.

Figure 10 (2), (3) represent a shallow ring shaped recess formed at the center of the end surface 23 of a joint. A taper 24a is formed at the inner peripheral surface of the outside of the recess to heighten the seal efficiency by being abutted to the taper of the outer peripheral wall of the seal ring.

Figure 11 shows a shape of an end surface of a pipe joint and an image of a seal ring. It is known that a shallow plate like recess or ring shaped recess 24 is formed at the center of the end surface 23 of the joint, when compared with figure 8.

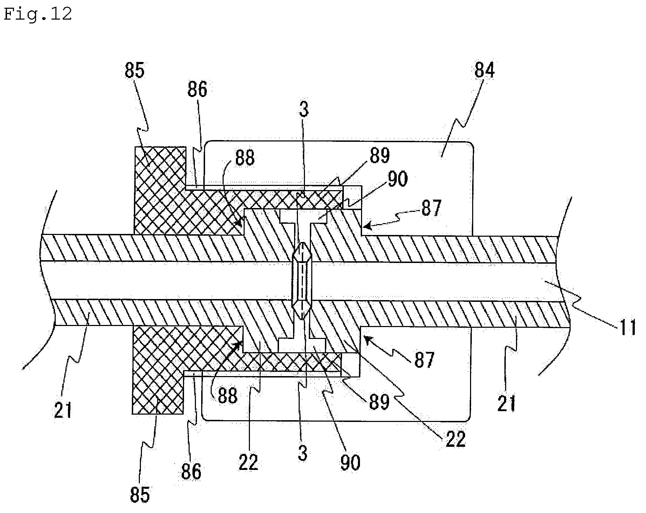

Next, the configuration of a joint for high pressure pipes according to embodiment 8 is explained by referencing figure 12.

The joint for high pressure pipes of embodiment 8 employs a seal ring 3 made of a metal material with a rhombic shape at the cut surface along the axis direction being abutted to the end surface of a joint opposing at the opposing pinnacle. A shallow plate like or ring shaped recess is formed at the center of each end portion 22 of 2 pipes.

Also, the taper angle α of the inner peripheral surface of the recess is 59°. This is wider than the taper angle 58° of the seal ring of the outer peripheral wall by 1°. And, the depth of the recess is 0.3 mm.

By making the end surface of the joint to be configured as the one mentioned above, the adhesion between the tapered outer peripheral surface disposed at the end surface and the seal ring is enhanced which leads to improved seal efficiency and heightened high pressure resistance.

The joint for high pressure pipes in embodiment 8 is a pipe joint for connecting the first pipe and the second pipe, being configured by 1) to 5) below.
1) A first joint (the joint on the left side in figure 12) connected to a first pipe (not illustrated) configured by an end portion 22, intermediate portion 21 and a stepped portion 88, having an internal void 11
2) A second joint (the joint on the right side in figure 12) connected to a second pipe (not illustrated) configured by an end portion 22, intermediate portion 21 and a stepped portion 87, having an internal void 11
3) A male screw portion 85 having a through hole with a male screw 86 formed around an outer peripheral portion
4) A female nut 84 of a cap-nut shape screwed to a male screw portion 85 to be fixed
5) A seal ring 3 for maintaining the seal efficiency at the butted portions, made of a metal material having a rhombic shape in a cut surface along an axis direction and abutted to the edge surface of a joint opposing at the opposing pinnace

In 1) and 2) above, the outer diameter of each end portion 22 of the first joint and the second joint at the butting portion is larger than the outer dimeter of the intermediate portion 21 of the first joint and the second joint. For that reason, step portions (87, 88) are formed.

In 3) above, the inner peripheral surface of the through hole of the male screw portion 85 is configured with a first inner peripheral surface and a second inner peripheral surface and a step portion 88 with diameters quasi same as, larger than and smaller than the outer diameter of the end portion 22 and the outer diameter of the intermediate portion.

The inner peripheral surface of the female nut 84 in 4) above is configured with a third inner peripheral surface, a fourth inner peripheral surface and a step portion 87 with diameters quasi same as, larger than and smaller than the outer diameter of the male screw portion 85 and the outer diameter of the intermediate portion 21 of the joint.

The abutting portion of the first joint and the second joint is housed into a through hole of the male screw portion 85 under the abutted state of a step portion 88 of the first joint and a step portion 88 of the male screw portion.

When a female nut 84 is fitted to a male screw portion 85 by screwing, the step portion 87 of a female nut 84 and the step portion 87 of the second joint are abutted.

### [Embodiment 9]

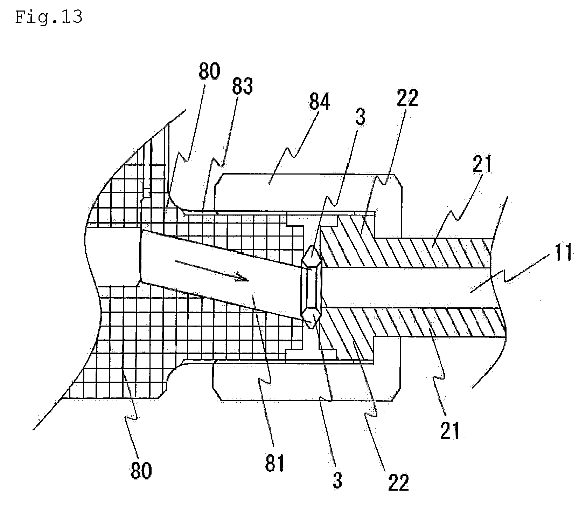

Next, structures of joints according to other embodiments in this invention are explained by referencing figure 13.

Figure 13 shows a joint structure of other embodiments according to the present invention.

The joint structure shown in figure 13 has a rhombic shape in the cut surface along the axis direction and a seal ring 3 made of a metal material abutting on the end surface of a joint opposing at the opposing pinnacle.

Recesses of either a shallow plate shape or a ring shape are formed at the center of the end surface as the shape of the end surface of the joint for preserving the seal efficiency at the butting portion of the end portion of the joint of the valve main body 80 and the end portion 22 of the pipe joint. The taper angle of the inner peripheral surface of the dent is 59° and is made to be smaller than the taper angle 60° of the outer peripheral surface of the seal ring by 1°.

An end surface of an end portion 22 of a pipe joint, an end surface of an end portion of a valve body 80, and a shallow plate shaped or ring shaped recess is formed at an end surface of an end portion 22 of a pipe joint, at an end surface of a joint end portion of a valve main body 80 and at the center of each end surface and, adhesiveness by outer peripheral wall of a tapered recess and a tapered outer peripheral surface of a seal ring 3 is heightened, improving seal efficiency and heightening high pressure resistance.

### [Embodiment 10]

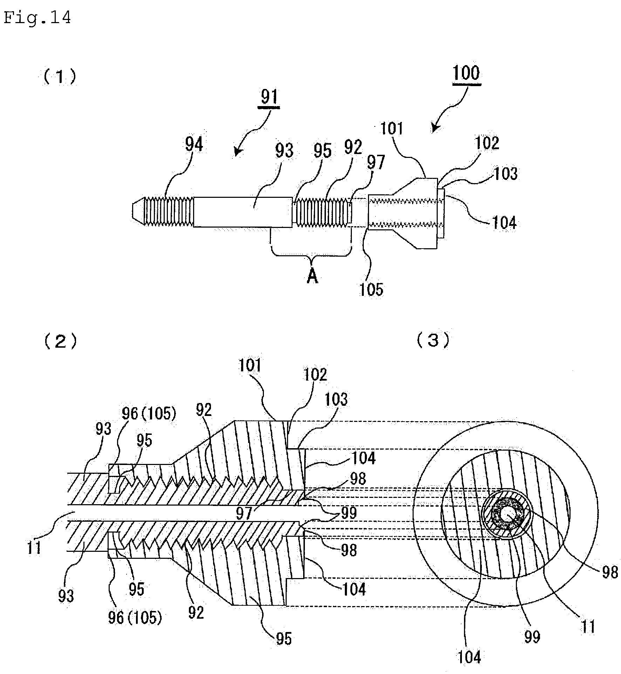

Next, structures of joints according to other embodiments in this invention are explained by referencing figure 14.

For the joint structure shown in figure 14(1), the pipe portion 91 and the end portion 100 exist as separate members and these are integrated by screwing. The outer diameter of the end portion 100 is larger than the outer diameter of pipe portion 91. Two screw threads are disposed at two positions of the pipe portion 91 (92, 94). The screw thread 92 is screwed with a screw cutting sleeve formed on the inner wall of the end portion 100. The outer diameter of the outer peripheral projection portion 101 at the end portion 100 is larger than the outer diameter of intermediate portion 93 of the pipe portion 91 and the outer peripheral projection portion 101 at the end portion 100 is clamped under an abutted state of the joint.

Figure 14 (2) is a cross sectional drawing of A portion in figure 14 (1). A ditch 95 is formed between a screw thread 92 and intermediate portion 93 and the end portion of intermediate portion 93 is a wall surface 96 of the ditch 95. The end portion 100 advances by screwing as far as the position to be abutted to this wall surface 96. By this structure, the end surface 104 of the end portion 100 and the end surface 98 of the pipe portion 91 are arranged to be flush with each other by preserving errors minimum. A recess 99 is formed at the center of end surface 98 of the pipe portion 91. Sealing is improved by fitting of a seal ring (not illustrated) to this recess 99.

Figure 14 (3) illustrates the end portion of the object integrated by screwing of the pipe portion 91 and the end portion 100 of the joint, viewed from the axis direction of the joint. There is a slight opening between the end surface 98 of the pipe portion 91 and the end surface 104 of the end portion 100, which is an opening between the outer peripheral wall 97 of the end portion of the screw thread 92 of the pipe portion 91 and the inner wall of the end portion 100.

According to the joint structure in embodiment 10, a screw thread 92, a screw groove 95 and a recess 99 are formed by processing the end portion of a conventional pipe and screwing the end portion 100, which becomes usable as a joint for high pressure pipes according to the present invention.

### [Embodiment 11]

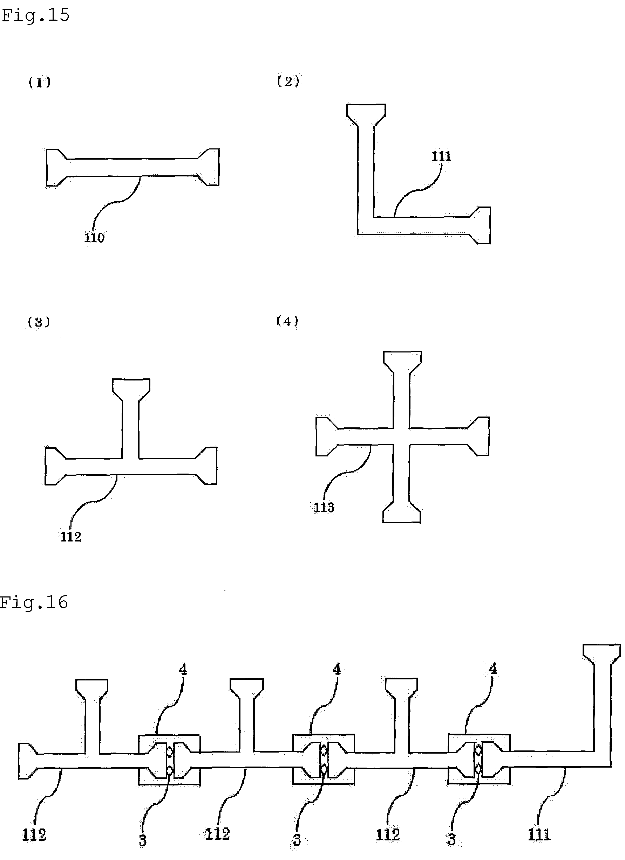

Next, a mechanism for connecting a joint with another joint is explained by referencing figures 15 to 17.

Figure 15 shows a joint (called connection joint) capable of connecting a joint to another joint. The connection joint for high pressure pipes is a joint shaped straight, a letter L, a letter T or a cross, the outer diameters of all pipe ends of the joint being larger than the outer diameter of the central portion and joints can be connected by a clamp having a band portion covering the abutting portion and a tightening member for contracting the inner diameter of the band portion by a tightening operation, in an butted state of two pipe ends of the same outer diameter.

Figure 15 (1) shows a connecting joint 110 in a straight shape (a short pipe), figure 15 (2) shows a connecting joint 111 in an L letter shape (called elbow) bendable as far as 90°, figure 15 (3) shows a connecting joint 112 (corresponding to the fourth joint in embodiment 4) in a T letter shape branched perpendicularly to longitudinal direction at the center of a straight shape and figure 15 (4) shows a connecting joint 113 in a cross shape branched in 4 directions. In each connecting joint (110 to 113), the end portion of the joint is processed in advance or integrally welded to become shapes of the first joint or the second joint as shown in embodiment 1 mentioned above.

Therefore, it becomes possible to form a piping system by arranging connecting joints even without pipes as shown in figure 16. In figure 16, three T-shaped connecting joints 112 are arranged side by side, seal rings 3 are disposed at each butted portion of each end portion and are fixed and connected by clamps 4. Also, the connecting joint 112 in a T-letter shape on the right side and each end portion of a connecting joint 111 in an L-letter shape are fixed and connected by clamps 4.

Also, in devices of manual valves 120 as shown in figure 17, the end portion of the pipe integrated with devices are processed or previously welded integrally to become shapes of the first joint or the second joint as shown in embodiment 1 mentioned above. And the left end portion of a manual valve 120 and the right end portion of a connecting joint of T letter shape 112 are fixed and connected by a clamp 4 and the right end portion of a manual valve 120 and the left end portion of a connecting joint 110 in a straight shape are fixed and connected by a clamp 4. As is shown here, it becomes possible to realize a piping system only by connecting joints by employing connecting joints.

### [Explanation of Signs]

- 1: Joint for high pressure pipes
- 2a, 20a: First joint
- 2b, 20b: Second joint
- 2c, 2d, 2e: Third joint
- 3, 3a: Seal ring
- 4, 4a, 4b, 40a ~ 40c: Clamp
- 5, 5a, 5b, 7, 7a, 7b: Tightening bolt
- 6, 6a, 6b: Nut
- 11: Inner vacancy of pipe
- 21: Intermediate portion
- 22: End portion
- 23: End surface
- 24: Recess of end surface
- 24a: Taper
- 30a: First pipe
- 30b: Second pipe
- 41: Band portion
- 42: Screwing engagement portion
- 45: Welded portion
- 50: Pipe
- 51: Screwing engagement portion
- 52: Gland nut
- 54: End portion of pipe
- 55: Collar
- 60: Joint main body
- 61: Through-hole
- 62: Screw hole
- 70: Retainer
- 70a: Claw portion
- 71: Groove portion
- 72, 87, 88: Step portion
- 80: Valve main body
- 83, 86: Male screw
- 84: Female nut
- 85: Male screw portion
- 91: Pipe portion
- 92, 94: Screw thread
- 93: Intermediate portion
- 95: Ditch
- 100: End portion
- 110 to 113: Connecting joint

## Claims

1. A pipe joint for high pressure pipes for connecting a first pipe and a second pipe, comprising:
said pipe joint comprising;
a first joint to be connected to a first pipe;
a second joint to be connected to a second pipe;
a clamp having a band portion for covering a butting portion of the first joint and the second joint, and for connecting the first joint and the second joint under a butted state;
a seal ring for maintaining a seal efficiency at a butting portion;
a tightening member for contracting an inner diameter of the band portion by a tightening operation; and
an outer diameter of each end of the first joint and the second joint at a butting portion being larger than an outer diameter of the middle portions of the first joint and the second joint, and an inner surface of the band portion being formed for the inner surface of the band portion at the clamp and each end portion of the first joint and the second joint becoming fitted under a butting state of the first joint and the second joint.

2. A pipe joint for high pressure pipes for connecting a first pipe and a second pipe, comprising:
said pipe joint comprising;
a first joint to be connected to a first pipe;
a second joint to be connected to a second pipe;
a third joint having one end portion to be butted against the first joint and another end portion to be butted against the second joint;
a first clamp having a band portion for covering a butting portion of the first joint and the third joint, and for connecting the first joint and the third joint under a butting state;
a second clamp having a band portion for covering a butting portion of the second joint and the third joint, and for connecting the second joint and the third joint under a butting state;
a seal ring for maintaining seal efficiency at a butting portion;
a tightening member for contracting an inner diameter of a band portion by a tightening operation;
the outer diameter of each end portion of the first joint and the third joint at the butting portion of the first joint and the third joint being larger than the outer diameter of the intermediate portion of the first joint and the third joint, and an inner surface of the first band portion being formed for the inner surface of the first band portion at the first clamp and each end portion of the first joint and the third joint to be fitted under a butting state of the first joint and the third joint; and
the outer diameter of each end portion of the second joint and the third joint at the butting portion of the second joint and the third joint being larger than the outer diameter of the intermediate portion of the second joint and the third joint, and an inner surface of the second band portion being formed for the inner surface of the second band portion at the second clamp and each end portion of the second joint and the third joint to be fitted under a butting state of the second joint and the third joint.

3. A joint for high pressure pipes as set forth in claim 2, wherein further comprising:
said third joint having either a straight shape or an L shape bendable by 45° to 90°, or a U letter shape.

4. A pipe joint for high pressure pipes for connecting a first pipe, a second pipe and a third pipe, comprising:
said pipe joint comprising;
a first joint to be connected to a first pipe;
a second joint to be connected to a second pipe;
a third joint to be connected to a third pipe;
a fourth joint having a first end portion to be butted against the first joint, a second end portion to be butted against the second joint and a third end portion to be butted against the third joint;
a first clamp having a first band portion for covering a butting portion of the first joint and the fourth joint, and for connecting the first joint and the fourth joint in a butted state;
a second clamp having a second band portion for covering a butting portion of the second joint and the fourth joint, and for connecting the second joint and the fourth joint in a butted state;
a third clamp having a third band portion for covering a butting portion of the third joint and the fourth joint, and for connecting the third joint and the fourth joint in a butted state;
a seal ring for maintaining seal efficiency at a butting portion;
a tightening member for contracting an inner diameter of a band portion by a tightening operation;
the outer diameter of each end portion of the second joint and the fourth joint at the butting portion of the second joint and the fourth joint being larger than the outer diameter of the intermediate portion of the second joint and the fourth joint, and the inner surface of the second band being formed for the internal surface of the band portion of the second clamp and each end portion of the second joint and the fourth joint to be fitted in the butting state of the second joint and the fourth joint; and
the outer diameter of each end portion of the third joint and the fourth joint at the abutting portion of the third joint and the fourth joint being larger than the outer diameter of the intermediate portion of the third joint and the fourth joint and an inner surface of the third band being formed for the inner surface of the band portion of the third clamp and each end portion of the third joint and the fourth joint to be fitted in the abutting state of the third joint and the fourth joint.

5. A joint for high pressure pipes for connecting N (larger than 3) pipes, comprising:
said pipe joint comprising;
N sub joints to be connected to each pipe;
a main joint having N end portions to be butted against sub joints;
N clamps having a band portion for covering a butting portion of the sub joint and an the main joint, for connecting a sub joint and a main joint in a butting state;
a seal ring for maintaining seal efficiency at an abutted part;
a tightening member for contracting an inner diameter of a band portion by a tightening operation; and
the outer diameter of each end portion of the sub joint and the main joint at the butted portion of the sub joint and the main joint being larger than the outer diameter of the intermediate portion of the sub joint and the main joint and the inner surface of the band portion being formed for the inner surface of the band portion at a clamp and each end portion of the sub joint and the main joint to be fitted under an butting state of the sub joint and the main joint.

6. A joint for high pressure pipes as set forth in either one of claims 1, 2, 4, 5, wherein further comprising;
said seal ring being made of a metal material, and having a rhombus shape or a square shape with two diagonal lines orthogonal to each other in a cut surface along an axis direction, being abutted against an end surface of a joint opposing at the opposing pinnacle, and a retainer retainable to an end surface of said joint being disposed.

7. A joint for high pressure pipes as set forth in either one of claims 1, 2, 4, 5, wherein further comprising;
said seal ring being O-ring of metal material or resin material.

8. A joint for high pressure pipes as set forth either in claim 2 or 3, wherein further comprising:
a valve being selected from a group of safety valves, closing valves, check valves, decompression valves, globe valves, ball valves and overflow preventing valves, or either one of machine parts selected from valves, filters, orifice valves, pressure gauges, flow meters, heat exchangers, compressors and pressure vessels, being disposed at a part of said third joint.

9. A joint for high pressure pipes as set forth in claim 4, wherein further comprising:
a valve being selected from a group of safety valves, closing valves, check valves, decompression valves, globe valves, ball valves and overflow preventing valves, or either one of machine parts selected from valves, filters, orifice valves, pressure gauges, flow meters, heat exchangers, compressors and pressure vessels, being disposed at a part of said fourth joint.

10. A joint for high pressure pipes as set forth in claim 5, wherein further comprising:
a valve being selected from a group of safety valves, closing valves, check valves, decompression valves, globe valves, ball valves and overflow preventing valves, or either one of machine parts selected from valves, filters, orifice valves, pressure gauges, flow meters, heat exchangers, compressors and pressure vessels, being disposed at a part of said main joint.

11. A joint for high pressure pipes in claim 6, wherein further comprising:
a ring shaped shallow recess formed at the center of an end surface of the joint,
a taper angle of the inner peripheral surface of said recess being wider by 0° to 2° or narrower by 0° to 2° than a taper angle of the outer peripheral wall of said seal ring, and
said seal ring being fittable into said recess.

12. A joint for high pressure pipes in claim 6, wherein further comprising:
a plate shaped shallow recess formed at the center of an end surface of the joint,
a taper angle of the inner peripheral surface of said recess being wider by 0° to 2° or narrower by 0° to 2° than a taper angle of the outer peripheral wall of said seal ring, and
said seal ring being fittable into said recess.

13. A joint for high pressure pipes as set forth in claim 1 or 12, wherein further comprising:
a taper angle of an inner peripheral surface of said recess being 10° to 80°.

14. A joint for high pressure pipes, comprising:
a rhombus shape or a square shape having two diagonal lines orthogonal to each other in the cut surface along the axis direction, and the seal efficiency at the butting portion with the pipe joint is preserved using a seal ring made of a metal material abutting with the end surface of the joint opposing at the opposing pinnacle,
a plate or ring shaped shallow recess formed at the center of an end surface of the joint,
a taper angle of the inner peripheral surface of said recess being wider by 0° to 2° or narrower by 0° to 2° than a taper angle of the outer peripheral wall of said seal ring, and
said seal ring being fittable into said recess.

15. A joint for high pressure pipes as set forth in claim 14, wherein further comprising:
a taper angle of an inner peripheral surface of said recess being 10° to 80°.

16. A pipe joint for high pressure pipes for connecting a first pipe and a second pipe, comprising:
said pipe joint comprising;
a first joint having an end portion, an intermediate portion and a step portion, for being connected to a first pipe;
a second joint having an end portion, intermediate portion and a step portion, for being connected to a second pipe;
a male screw portion having a through hole with a male screw formed at an outer peripheral portion;
a female nut in a cap-nut shape to be fixed by screwing to a male screw portion; and
a seal ring for maintaining a seal efficiency at a butting portion;
an outer diameter of each end of the first joint and the second joint at a butting portion being larger than an outer diameter of the middle portions of the first joint and the second joint, and an inner peripheral surface of the through hole at the male screw portion being configured by the first inner peripheral surface and the second inner peripheral surface with diameters quasi same as, larger than or smaller than the outer diameter of the end portion of the oint and a step portion formed in between, and an inner peripheral surface of the female nut being configured by the third inner peripheral surface and the fourth inner peripheral surface with diameters quasi same as, larger than and smaller than the outer diameter of the male screw portion and the outer diameter of intermediate portion of the joint, and a step portion formed in between.

17. A structure of a joint, comprising:
an end surface of a joint selected from any one of safety valves, closing valves, check valves, decompression valves, filters, orifice valves, pressure gauges, flow meters, heat exchangers, compressors and pressure vessels;
for maintaining seal efficiency at an abutted portion against a joint for high pressure pipes as set forth in any one of claims 1 to 4, by using a seal ring made of a metal material and having a cut surface of a rhombic shape along an axis direction being abutted against an end surface of a joint opposing at an opposing pinnacle; and
a taper angle at an inner peripheral surface of said recess at an end surface of a joint being wider than a taper angle at an outer peripheral wall of said seal ring by 0° to 2° or narrower by 0° to 2°, and said seal ring being fittable into said recess.

18. A structure of a joint as set forth in claim 17, wherein further comprising:
a taper angle of an inner peripheral surface of said recess being 10° to 80°.

19. A machinery to be used for a joint for high pressure pipes as set forth in any one of claims 1 to 4, wherein further comprising:
said machinery being a machinery selected from a group of safety valves, closing valves, check valves, decompression valves, globe valves, ball valves and over flow preventing valves, or a machinery selected from a group of filters, orifices, pressure gauges, flow meters, heat exchangers, compressors and pressure vessels;
a first pipe or a second pipe being protruded from the main body of said machinery; and
an end portion of the first pipe or the second pipe with a processing thereof becoming usable as a first joint or a second joint.

20. A joint for high pressure pipes, wherein further comprising;
a joint having either one of a straight shape, an L letter shape, T letter shape or a cross shape;
all of outer diameters of pipe end portions belonging to said joint being larger than the outer diameter at the center portion;
a piping system being configured by connecting joints to other joints by clamps furnished with a band portion for covering a butting portion under a state wherein two pipe end portions with a same outer diameter being butted, a seal ring made of a metal material for maintaining seal efficiency of a butting portion; and
a tightening member for contracting an inner diameter of a band portion by a tightening operation.
